# EUROPEAN PATENT SPECIFICATION

(11) **EP 3 479 698 B1**
(45) Date of publication and mention of the grant of the patent: **06.01.2021**
(21) Application number: 18214924.5
(22) Date of filing: 14.11.2016
(51) Int. Cl.: A22C 15/00

(54) **HAM LOADING AND REMOVING DEVICE**
SCHINKENBELADUNGS- UND -ENTFERNUNGSVORRICHTUNG
DISPOSITIF DE CHARGEMENT ET DÉCHARGEMENT DE JAMBON

(43) Date of publication of application: 08.05.2019
(62) Divisional of application: 16198699.7
(73) Proprietor: VE.MA.C. Societa' A Responsabilita' Limitata, 41051 Castelnuovo Rangone (MO) (IT)
(72) Inventor: COSTANTINI, Maurizio, 41057 Spilamberto (MO) (IT); VEZZALI, Franco, 41057 Spilamberto (MO) (IT); MALAGOLI, Uliano, 41041 Formigine (MO) (IT)
(74) Representative: Savini, Stefania

(56) References cited:
- EP-A1- 2 305 044
- EP-A1- 2 870 880
- GB-A- 190 924 679

## Description

The invention relates to a loading and removing device for loading and removing hams, in particular a device arranged for loading hams from conveying means to a seasoning frame and possibly removing the hams from the seasoning frame. In particular, the loading and removing device for loading and removing hams removes the hams from the conveying means, loads the hams onto the seasoning frame and, vice versa, removes the hams from the seasoning frame and possibly deposits the hams on conveying means. The loading and removing device for loading and removing hams can be used for hooking the hams to a hooking device arranged for supporting a ham during ham seasoning, storage and transport operations.

Loading devices for loading hams are known that are arranged for loading hams onto a seasoning frame. Such loading devices for loading hams comprise at least one pair of grippers arranged for gripping a shank of a ham and at least one widening element, for example in the shape of scissors, arranged above the pair of grippers to be inserted into a cord or string that clasps the shank of the ham.

A drawback of such loading devices for loading hams is that they do not enable the hams to be removed from the conveying means or the hams to be positioned on the latter, but the hams have to be hung manually by operators onto such loading devices and removed from the latter manually by the operators to be arranged on the conveying means

EP2870880 A1 discloses a device for loading hams on storage frames and unloading the hams therefrom, said storage frames being provided with removable supporting bars provided with hooking means to which the hams can be suspended, said device comprises gripping means suitable for engaging said removable supporting bars and spacer means suitable for spacing apart from one another two rows of hams hanging on opposite sides of a removable supporting bar. Such a device allows to insert supporting bars with the hams suspended thereon in the storage frames and to extract the supporting bars from the storage frames but it does not allow to load on storage frames or unload therefrom a single ham of the suspended hams on a supporting bar.

One object of the invention is to improve the ham loading and removing devices of known type.

A further object is to obtain a loading and removing device for loading and removing hams that enables hams to be hooked to and hams to be removed from a seasoning frame (or to/from hooking devices for hooking hams mounted on the seasoning frame), in a robotised manner.

Still another object is to make available a loading and removing device for loading and removing hams that is simple and cheap to make.

Owing to the loading and removing device for loading and removing hams according to the invention, loading the hams onto the seasoning frames and removing the hams from the seasoning frames can be performed in a completely robotised manner.

Such objects and advantages and still others are all achieved by a loading and removing device for loading and removing hams according to one or more of the claims set out below.

The invention can be better understood and implemented with reference to the attached drawings that illustrate an embodiment thereof by way of non-limiting example in which:
Figure 1 is a front view of a pair of hams hooked to a seasoning frame by a respective hooking device, which does not form part of the present invention, to which the hams can be hooked by a loading and removing device for loading and removing hams according to the invention;
Figure 2 is a top view of one of the hooking means of Figure 1 in an open operating configuration;
Figure 3 is a top view of one of the hooking means of Figure 1 in a closed operating configuration;
Figure 4 is a side view of the hooking device of Figure 2 and of a loading and removing device for loading and removing hams according to the invention in a step of a sequence of hooking the ham to the hooking device;
Figure 5 is an enlarged detail of Figure 4;
Figure 6 is a side view of the hooking device of Figure 2 and of the loading and removing device for loading and removing hams of Figure 4 in a further step of a sequence of hooking the ham to the hooking device by the loading and removing device for loading and removing hams of Figure 4;
Figure 7 is an enlarged detail of Figure 6;
Figure 8 is a side view of the hooking device of Figure 2 and of the loading and removing device for loading and removing hams of Figure 4 in a step of a sequence of removing the ham from the hooking device by the loading and removing device for loading and removing hams of Figure 4;
Figure 9 is an enlarged detail of Figure 8;
Figure 10 is a side view of the hooking device of Figure 2 and of the loading and removing device for loading and removing hams of Figure 4 in a further step of a sequence of removing the ham from the hooking device by the loading and removing device for loading and removing hams of Figure 4;
Figure 11 is an enlarged detail of Figure 10;
Figure 12 is a top view of a plurality of hams arranged on conveying means before being removed by the loading and removing device for loading and removing hams of Figure 4 to be hooked to the seasoning frame or after being unloaded from the seasoning frame by the loading and removing device for loading and removing hams of Figure 4;
Figure 13 is a schematic top view of the loading and removing device for loading and removing hams of Figure 4 showing some components thereof;
Figure 14 is a side view of the loading and removing device for loading and removing hams of Figure 4 in a first step of removing hams from the conveying means of Figure 12;
Figure 15 is a side view of the loading and removing device for loading and removing hams of Figure 4 in a second step of removing hams from the conveying means of Figure 12.

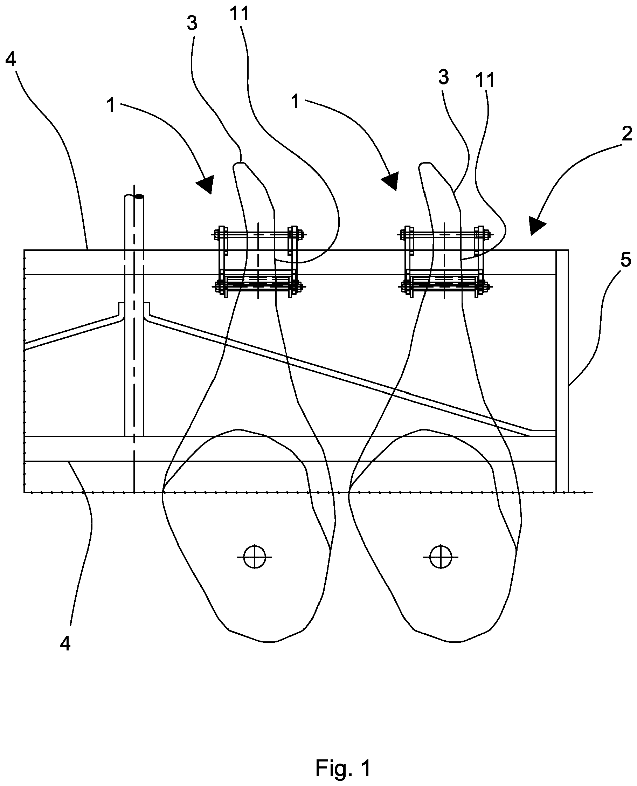

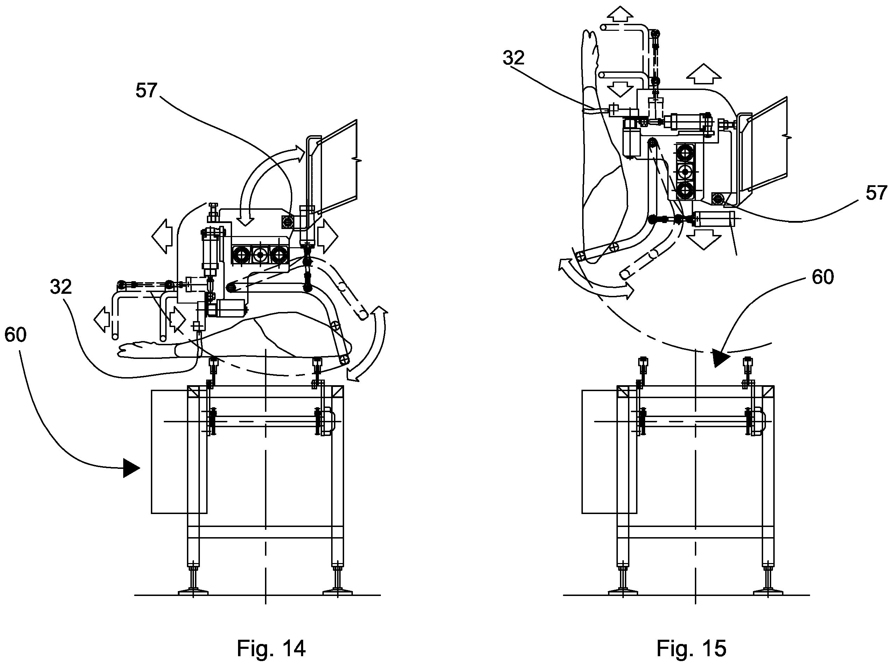

With reference to Figure 15, a loading and removing device 100 is shown for loading and removing hams 3 according to the invention, arranged for removing hams 3 from conveying means 60 and loading the hams 3 onto a seasoning frame 2 (Figure 1) and arranged for removing the hams 3 from the seasoning frame 2 and replacing the hams 3 on the conveying means 60.

The loading and removing device 100 can hook the hams 3 to a hooking device 1 like the one disclosed below, or to other hooking devices. As will be explained better below, when the hooking devices 1 are used, the hams 3 are devoid of cords or strings.

Alternatively, the loading and removing device 100 can also hook the hams 3 directly to hooks, which are not shown, with which the seasoning frame 2 can be provided by means of cords or strings fixed to the hams 3. When the hooking devices 1 are not being used, the hams 3 have to be provided with the cords or strings fixed around the respective shank 11. With reference to Figure 1, a pair of hooking devices 1, which does not form part of the present invention, is shown, mounted on the seasoning or storage frame 2 for seasoning or storing hams 3 and arranged for hooking a respective ham 3 to the seasoning frame 2. The seasoning frame 2 is only partially shown in Figure 1. The hooking devices 1 can be used for hooking the hams 3 to the seasoning frame 2 by the loading and removing device 100 for loading and removing hams.

The seasoning frame 2 is provided with a plurality of supporting bars 4, in particular removable supporting bars 4, resting on respective pairs of supports 5 with which the seasoning frame 2 is provided, only one support 5 being visible in Figure 1.

In particular, the hams 3 are hung by a respective hooking device 1 to a supporting bar 4 of the seasoning frame 2.

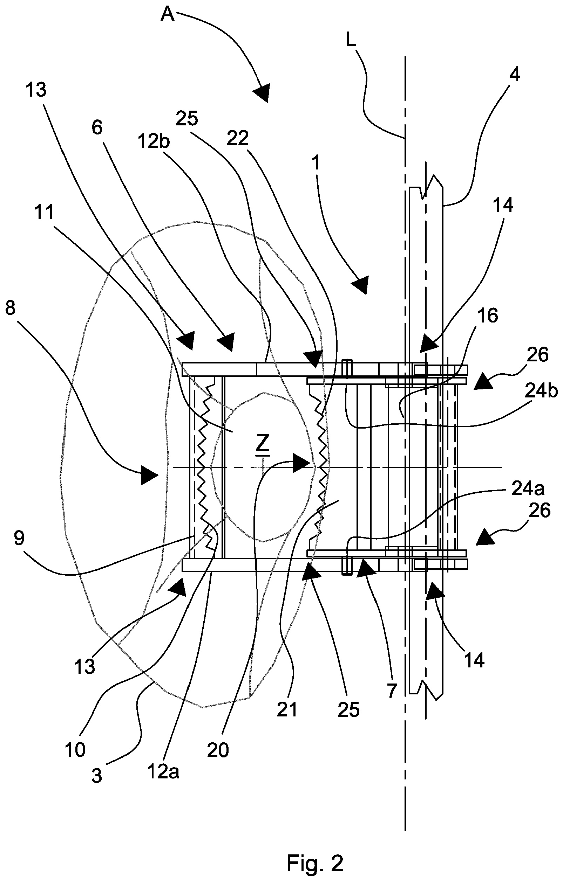

The seasoning frame 2 can be arranged resting on ground, such as a floor of a seasoning warehouse, or on an earth-moving device, or can be hooked to an overhead guideway. With reference to Figures 2 to 5, each hooking device 1 comprises a first jaw 6 and second jaw 7 arranged in use for cooperating together in order to surround a ham 3, in particular the shank 11 of the ham 3.

The first jaw 6 comprises a first end part 8 provided with a first plate 9 provided with a plurality of protruding elements 10, in particular teeth, arranged for engaging portions of the shank 11 of the ham 3.

The protruding elements 10 can be arranged for forming substantially a first C in a plan view. This arrangement enables the protruding elements 10 to wrap a larger portion of shank 11 than for example in the case in which the arrangement is linear, and thus enables the ham 3 to be gripped more effectively.

The protruding elements 10 protrude inside the hooking device 1.

The end part 8 extends prevalently in a direction that is substantially parallel to the supporting bar 4 when the hooking device 1 for hooking a ham 3 is mounted on the seasoning frame 2.

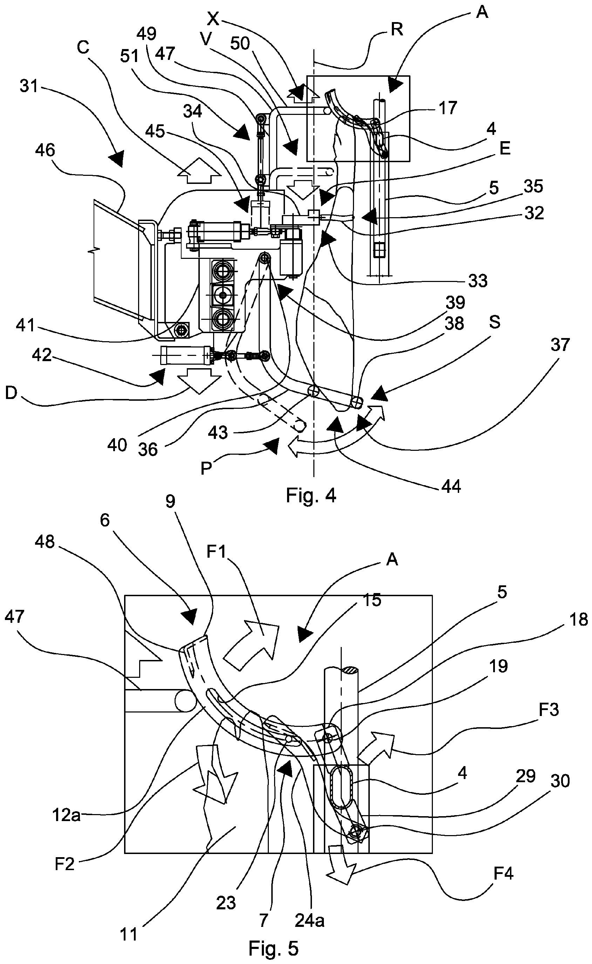

The first plate 9 can optionally have a substantially L-shaped section (Figure 5), where the protruding elements 10 protrude from one side of the L, for example the longer side.

The first jaw 6 further comprises a pair of connecting plates 12a, 12b that extend prevalently in a direction that is substantially perpendicular to the supporting bar 4 when the hooking device 1 for hooking a ham 3 is mounted on the seasoning frame 2. Each connecting plate 12a, 12b can have a substantially arc-shaped plan section.

Each connecting plate 12a, 12b comprises two opposite ends, a first end 13 and a second end 14.

The first ends 13 are mounted on opposite zones of the first plate 9. For example, the first ends 13 are fixed by welding or by connecting means of known type to the first plate 9.

In each connecting plate 12a, 12b an opening 15 is obtained. Each opening 15 can have a substantially arc-shaped plan section, i.e. can have the same conformation as the connecting plate 12a, 12b in which it is obtained.

The second ends 14 are mounted rotatably on a rotating element 16, for example a pin, which is inserted into suitable through holes 17 obtained in the connecting plates 12a, 12b. In particular, the second ends 14 are integrally rotatable around a longitudinal axis L of the rotating element 16, said longitudinal axis L being substantially parallel to the supporting bar 4 when the hooking device 1 for hooking a ham 3 is mounted on the seasoning frame 2. The rotating element 16 extends prevalently substantially parallel to the supporting bar 4 when the hooking device 1 for hooking a ham 3 is mounted on the seasoning frame 2.

The rotating element 16 can be fixed to the supporting bar 4 by a pair of fixing plates 18 in which holes 19 are obtained into which the rotating element 16 is insertable.

Owing to the rotating element 16 and to the fixing plates 18, the first jaw 6 is connected to the supporting bar 4 so as to be able to rotate upwards or downwards, i.e. in a first oscillation direction F1 or in a second oscillation direction F2 indicated by a respective arrow in Figure 5.

The second jaw 7 comprises an end zone 20 provided with a second plate 21 provided with a plurality of further protruding elements 22, in particular teeth, arranged for engaging further portions of meat of the shank 11 of the ham 3. The further protruding elements 22 are substantially similar to the protruding elements 10 of the first jaw 6.

The second plate 21 can optionally have a substantially arc-shaped section, where the further protruding elements 22 protrude from an end of the arc.

The further protruding elements 22 can be arranged for forming substantially a second C in a plan view. This arrangement enables the further protruding elements 22 to wrap a larger portion of shank 11 than for example in the case in which arrangement is linear, and thus enables the ham 3 to be gripped more effectively.

The further protruding elements 22 protrude inside the hooking device 1, i.e. to the protruding elements 10.

A profile of the protruding elements 10 and a profile of the further protruding elements 22 define a gripping zone Z for the shank 11 of the ham 3. When the protruding elements 10 and the further protruding elements 22 are arranged substantially in a C, the gripping zone Z, in a top view, is substantially rhombus-shaped with curved sides, like an almond.

The end zone 20 extends prevalently in a direction that is substantially parallel to the supporting bar 4 when the hooking device 1 for hooking a ham 3 is mounted on the seasoning frame 2.

From opposite sides of the second plate 21 at least two engaging elements 23 project that are arranged for each being inserted inside a respective opening 15 so as to connect reciprocally the second jaw 7 to the first jaw 6.

Owing to this conformation and arrangement, the second jaw 7 can be moved towards or away from the first jaw 6.

In particular, the second plate 21 is movable towards or away from the first plate 9 in order to vary a dimension of the gripping zone Z so as to compensate for variations in the dimensions of the shank 11 due to the weight loss that occurs in the ham 3 during seasoning.

The conformation of the openings 15 is such that the second plate 21 is able to approach the first plate 9 through gravity during seasoning of the ham 3. In this manner, the gripping zone Z adapts automatically to weight reductions of the ham 3 during seasoning thereof. Each engaging element 23 can be substantially stem-shaped.

The second jaw 7 further comprises a pair of side plates 24a, 24b that extend prevalently in a direction that is substantially perpendicular to the supporting bar 4 when the hooking device 1 for hooking a ham 3 is mounted on the seasoning frame 2. Each side plate 24a, 24b can have a substantially S-shaped or upturned S-shaped plan section (Figure 5).

Each side plate 24a, 24b comprises two opposite ends, a first end 25 and a second end 26. The first ends 25 are mounted on opposite zones of the second plate 21. For example, the first ends 25 are fixed by welding or by connecting means of known type to the second plate 21.

Like the second ends 14 of each connecting plate 12a, 12b, also the second ends 26 of each side plate 24a, 24b are mounted rotatably on a rotation member 27, for example a pin, which is completely similar to the rotating element 16, which is inserted into through holes 28 obtained in the side plates 24a, 24b.

In particular, the second ends 25 are integrally rotatable around a longitudinal axis M of the rotation member 27, said longitudinal axis M being substantially parallel to the supporting bar 4 when the hooking device 1 for hooking a ham 3 is mounted on the seasoning frame 2 and being substantially parallel to the longitudinal axis L of the rotating element 16.

The rotation member 27 extends prevalently substantially parallel to the supporting bar 4 when the hooking device 1 for hooking a ham 3 is mounted on the seasoning frame 2.

The rotation member 27 can be fixed to the supporting bar 4 by a pair of mounting plates 29 in which holes 30 are obtained into which the rotation member 27 is insertable and fixable.

The fixing plates 18 can be mounted in such a manner as to protrude above the supporting bar 4, i.e. away from the ground, whereas the mounting plates 29 can be mounted in such a manner as to protrude below the supporting bar 4, i.e. away from the ground.

Owing to the rotation member 27 and to the mounting plates 29, the second jaw 7 is connected to the supporting bar 4 so as to be able to rotate upwards or downwards, i.e. in a first rotation direction F3 or in a second rotation direction F4, the first rotation direction F3 and the second rotation direction F4 being indicated by a respective arrow in Figure 5. The first rotation direction F3 is concordant to the first oscillation direction F1 whereas the second rotation direction F4 is concordant to the second oscillation direction F2 inasmuch as the rotation of the first jaw 6 around the rotating element 16 drags with it the second jaw 7, connected to the first hook by inserting the engaging elements 23 into the openings 15. The hooking device 1 can be made as a single piece or the various components thereof can be joined by connecting means of known type or by welding.

Once the hooking device 1 is mounted on the seasoning frame 2, each ham 3 can be loaded onto, or be removed from, the respective hooking device 1 by the loading and removing device 100 for loading and removing hams 3 onto/from the hooking device 1.

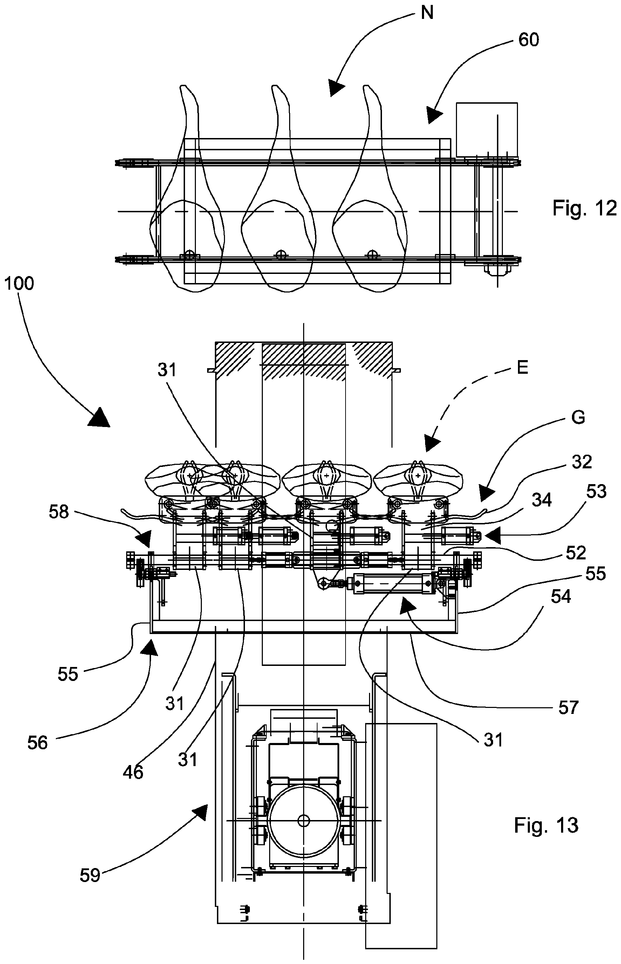

With reference in particular to Figure 13, the loading and removing device 100 for loading and removing hams 3 comprises a plurality of loading and removing units for loading and removing hams 31, each unit 31 being arranged for loading a ham 3 onto and removing a ham 3 from a hooking device 1. In Figure 13, four loading and removing units for loading and removing hams 31 are shown schematically, where some components have been eliminated to highlight others. Naturally, also a different number of loading and removing units 31 for loading hams into and removing hams from a loading and removing device 100 can be provided.

With reference in particular to Figures 4 to 11 and 13, each loading and removing unit 31 comprises gripping means comprising a pair of hooking arms 32 shown schematically in Figure 13, connected at a first end 33 thereof to a support element 34. A second end 35 thereof, opposite the first end 33, is intended for hooking laterally a portion of a shank 11 for hooking a ham 3 during the operations of inserting the ham 3 onto the hooking device 1 or removing the ham 3 from the hooking device 1.

Each support element 34 is slidingly connected to a connecting crosspiece 52. In fact, each loading and removing unit 31 can be slid along the connecting crosspiece 52 by respective lateral movement means 53 to vary a distance between two adjacent loading and removing units 31. This enables the distance to be adjusted between the loading and removing units 31 according to the distance between the hooking devices 1 mounted on the seasoning frame 2 with which they have to interact in use.

The lateral movement means 53 can comprise, for example, hydraulic or pneumatic operating cylinders, for example connected to a respective support element 34.

In addition to the variation in the distance between the axis of the single loading and removing units 31, it is also possible to move all the loading and removing units 31 together along the connecting crosspiece 52 by lateral collective movement means 54, for example comprising a motor.

In use, the hooking arms 32 are movable between an engaged position E, shown in Figures 4 to 11 and in Figure 13 by a dashed line, in which the hooking arms 32 are moved together to clamp between themselves a portion of the shank 11 of the ham 3 and retain the latter during the operations of placing of a ham 3 on the hooking device 1 or of removing a ham 3 from the hooking device 1, and a disengaged position G, illustrated in Figure 13, in which the hooking arms 32 are moved away from one another to free the portion of shank 11 of the ham 3 from the grip of the hooking arms 32.

In particular, the hooking arms 32 are rotatable around a rotation axis R substantially parallel to the supports 5 and substantially perpendicular to the longitudinal axis L of the rotating element 16 and to the longitudinal axis M of the rotation member 27.

The hooking arms 32 can be rotated around the rotation axis R by movement means 45 comprising, for example, hydraulic or pneumatic operating cylinders, which act on the two hooking arms 32.

The hooking arms 32 of two adjacent loading and removing units 31 can be arranged at staggered heights, such that when the aforesaid hooking arms 32 are arranged in the disengaged position G they do not come into reciprocal contact.

Each loading and removing unit 31 further comprises supporting means comprising a pair of supporting arms 36, only one of which is shown in Figures (in Figure 13 they have been removed), connected to a first end 37 thereof by a crosspiece 38. A second end 39, opposite the first end 37, of each supporting arm 36 is hinged on a respective fulcrum 40 on a support device 41.

The supporting arms 36 can be rotated around respective fulcrums 40 by driving means 42 comprising, for example, hydraulic or pneumatic operating cylinders, which act on the two supporting arms 36.

The supporting arms 36 are connected together also by a further crosspiece 43 arranged for connecting two portions of opposite supporting arms 36 that are arranged between the first ends 37 and the second ends 39 of the supporting arms 36.

The crosspiece 38 and the further crosspiece 43 are intended for restingly supporting a lower zone 44 of a ham 3 during the operations of inserting the ham 3 onto the hooking device 1 or removing the ham 3 from the hooking device 1.

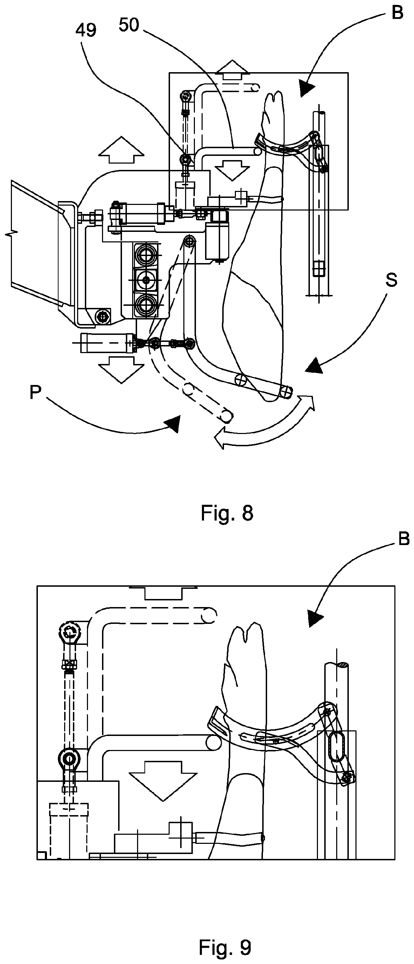

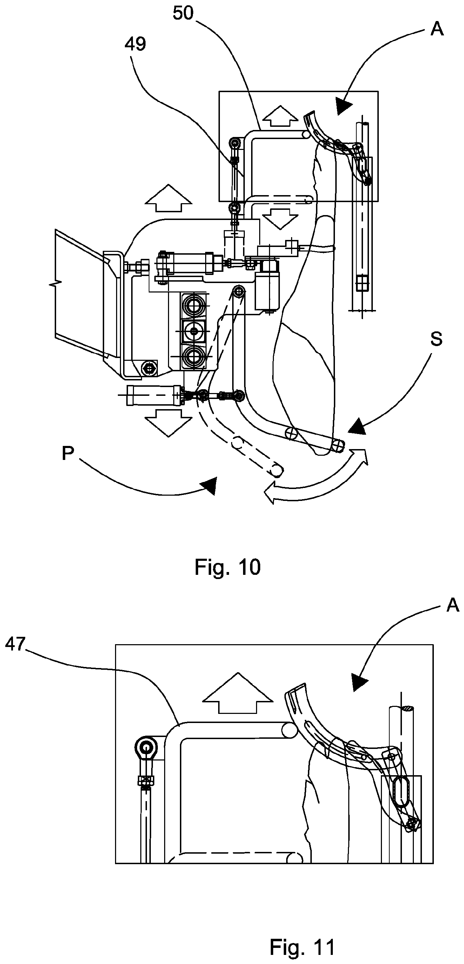

The supporting arms 36 are movable between a support position S, shown by a continuous line in the Figures, in which the crosspiece 38 and the further crosspiece 43 interact with portions of the lower zone 44, and a release position P, shown by a dashed line in Figures 8 and 10, in which the crosspiece 38 and the further crosspiece 43 do not interact with portions of the lower zone 44 and, in particular, the supporting arms 36 are rotated downwards with respect to the support position S.

The ham loading and removing device 100 comprises a pair of side arms 55, connected at a first end 56 by a bar 57. A second end 58 of the side arms 55, opposite the first end 56 is intended to support the connecting crosspiece 52 to which the loading and removing units 31 are connected.

The ham loading and removing device 100 can be fixed to a robotic arm 46 of a loading and unloading robot 59 for loading and unloading hams that moves the ham loading and removing device 100 upwards or downwards, i.e. towards or away from the hooking devices 1, to enable, respectively, hams 3 to be inserted into or hams 3 to be removed from the hooking devices 1 (or from other hooking devices) once the latter are mounted on the seasoning frame 2.

The ham loading and removing device 100 is thus movable upwards, i.e. in an inserting direction C for inserting the hams 3 and downwards, i.e. in a removing direction D for removing the hams 3, the inserting direction C and the removing direction D being shown, each, with an arrow in Figures 4, 6, 8 and 10.

The inserting direction C and the removing direction D are substantially parallel to the supports 5 and are substantially perpendicular to the ground.

Each loading and removing unit 31 further comprises a lifting rod 47, arranged for interacting with the first plate 9, in particular with a lower portion 48 thereof, in order to rotate the first jaw 6 around the rotating element 16 in the first oscillation direction F1 and, consequently, the second jaw 7 around the rotation member 27 in the first rotation direction F3. The rotations of the first jaw 6 and of the second jaw 7 make the first plate 9 move away from the second plate 21 inasmuch as the lifting of the first jaw 6 causes the engaging elements 23 to slide in the respective opening 15 towards the second ends 14 of the connecting plates 12. In this manner, it is possible to widen the gripping zone Z to enable a ham 3 to be inserted into, or a ham 3 to be removed from the respective hooking device 1.

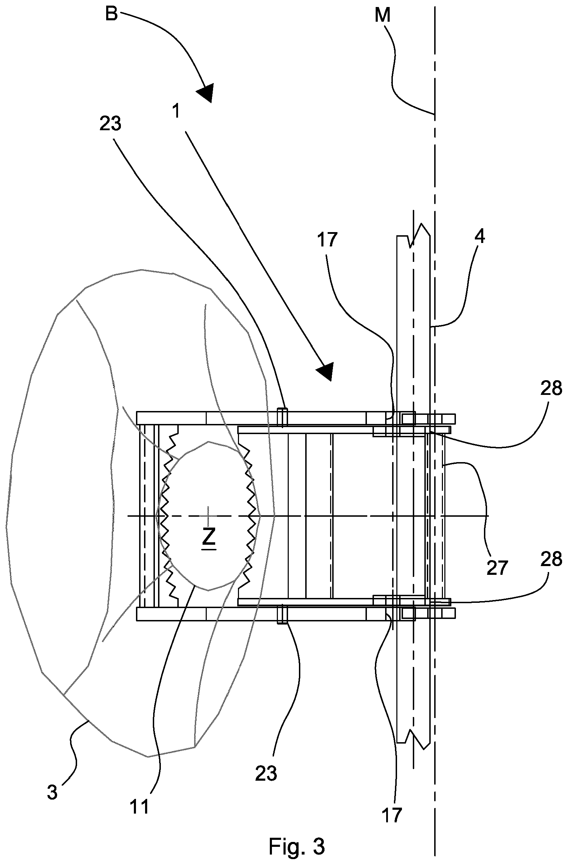

Owing to the interaction of the lifting rod 47 with the lower portion 48 of the first plate 9, each hooking device 1 can be taken to an open operating configuration A, shown in Figures 2, 4 and 5, in Figures 8 and 9 by a dashed line and in Figures 10 and 11 with a continuous line, in which the second plate 21 is moved away from the first plate 9, thus increasing the dimension of the gripping zone Z and consequently enabling a ham 3 to be inserted inside the gripping zone Z or the protruding elements 10 and the further protruding elements 22 to be disengaged and the ham 3 to be thus removed from the gripping zone Z. Without the interaction of the lifting rod 47 with the lower portion 48 of the first plate 9, the hooking device 1 is in a closed operating configuration B, shown in Figures 3, 6 and 7, in Figures 8 and 9 by a continuous line and in Figures 10 and 11 by a dashed line, in which through gravity the second jaw 7 is nearer the first jaw 6 than the open operating configuration A and the gripping zone Z occupies a minimum dimension determined by the minimum distance between the protruding elements 10 and the further protruding elements 22 (when no ham 3 is inserted into the hooking device 1) or occupies an intermediate dimension of use determined by the thickness of the shank 11 of the ham 3 (when a ham 3 is inserted into a hooking device 1).

In particular, the openings 15 are shaped in such a manner as to slide the second plate 21 towards the first plate 9 when it is wished to place the hooking device 1 in the closed operating configuration B (i.e. a dimension of the gripping zone Z is decreased), and to slide the second plate 21 away from the first plate 9 when it is wished to place the hooking device 1 in the open operating configuration A (i.e. a dimension of the gripping zone Z is increased).

The lifting rod 47 can comprise a first portion 49 and a second portion 50 that substantially form an L. The length of the first portion 49 with respect to the second portion 50 is variable, as is also the connecting angle between the first portion 49 and the second portion 50.

For example, the connecting angle can be substantially about 90 degrees, as illustrated in the Figures, and the first portion 49 is shorter than the second portion 50, but of course the connecting angle, the first portion 49 and the second portion 50 can also have different dimensions from those shown in the Figures.

The lifting rod 47 is driven to move by lifting means 51 between a lowered position V, in which the lifting rod 47 does not interact with the lower portion 48 of the first plate 9, and a raised position X, in which the lifting rod 47 interacts with the lower portion 48 of the first plate 9.

The lifting means 51 comprises, for example, hydraulic or pneumatic operating cylinders, for example connected to the first portion 49.

In an alternative version, not shown in the Figures, the lifting rod 47 can be fixed and interacts or does not interact with the lower portion 48 of the first plate 9 when the ham loading and removing device 100 is moved along the inserting direction C or along the removing direction D, respectively.

The ham loading and removing device 100 further comprises actuating means, not shown in the Figures, arranged for rotating the loading and removing units 31 by about 90° around the bar 57.

The hooking device 1 and, in particular, the first jaw 6 and the second jaw 7, can perform the sequence of movements illustrated in Figures 4 to 11.

In particular, Figures 4 to 7 show a sequence of hooking hams 3 to respective hooking devices 1 mounted on the seasoning frame 2, whereas Figures 8 to 11 show a sequence of removing of hams 3 from the respective hooking devices 1 mounted on the seasoning frame 2.

Figure 12 shows a plurality of hams 3 arranged aligned on a resting surface of conveying means 60, of known type, and with the shanks 11 facing the same way. The conveying means 60 is arranged for supporting and moving the hams 3 to take the hams 3 to a removing zone N from where they can be removed by the ham loading and removing device 100.

Figures 14 and 15 show, respectively, a side view of the loading and removing device 100 in a first step of removing hams 3 from the conveying means 60, in which the hams 3 restingly arranged on the conveying means 60 are hooked by the loading and removing device 100 for loading and removing hams 3, and a side view of the loading and removing device 100 in a second step of removing the hams 3 from the conveying means 60, in which the hams 3 are lifted from the conveying means 60 and rotated, in particular substantially by about 90°.

In use, when it is wished to hook hams 3 to the hooking devices 1 previously mounted on the seasoning frame 2 in a closed operating configuration B, the ham loading and removing device 100 is taken to near the removing zone N and the loading and removing units 31 are rotated by the actuating means in particular by about 90° so as to approach the conveying means 60 on which the hams 3 are arranged (Figure 14). The hooking arms 32 are arranged in the engaged position E and the supporting arms 36 are arranged in the support position S, such that the ham loading and removing device 100 can block the hams 3.

By the robotic arm 46, the ham loading and removing device 100 is driven along the inserting direction C such that the hams 3 are lifted from the conveying means 60. At this point, the loading and removing units 31 are again rotated by the actuating means, in particular by about 90° so as to take the hams 3 to a position in which they have the shanks 11 facing upwards (Figure 15).

By the robotic arm 46, the ham loading and removing device 100 is taken by the loading and unloading robot 59 to near the seasoning frame 2, and, then, to near the hooking devices 1 mounted thereupon. In particular, the ham loading and removing device 100 takes each ham 3 below the gripping zone Z of the respective hooking device 1 and moves each ham 3 along the inserting direction C. During movement of the ham loading and removing device 100 along the inserting direction C, each lifting rod 47 interacts with a respective lower portion 48 to enable the gripping zone Z to widen and thus enable the shank 11 to enter inside the gripping zone Z (Figures 4 and 5).

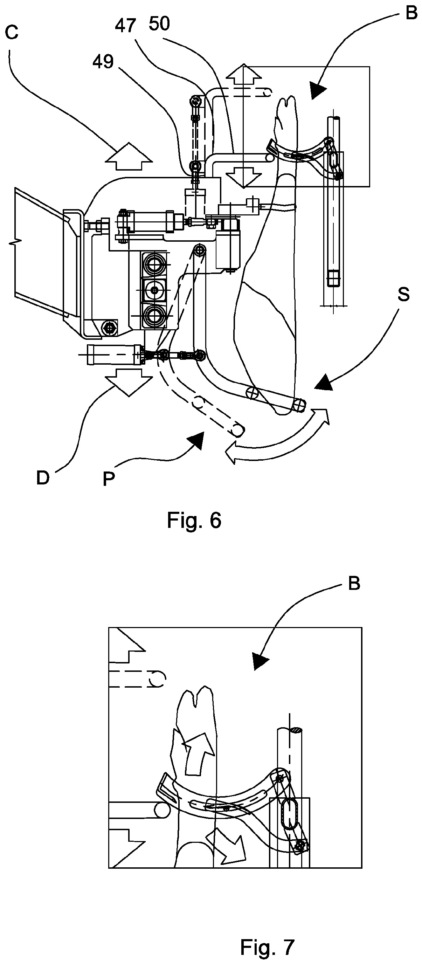

When the ham loading and removing device 100 is taken to a height that is such that the lifting rods 47 no longer interact with the respective lower portion 48, each first jaw 6 rotates through gravity downwards, i.e. in the second oscillation direction F2, dragging with itself the respective second jaw 7. The protruding elements 10 and the further protruding elements 22 engage in respective portions of meat of the ham 3, retaining the ham inside the gripping zone Z (Figures 6 and 7).

At this point, the hooking arms 32 of each ham loading and removing unit 31 are taken to the disengaged position G, the supporting arms 36 are taken to the release position P and the ham loading and removing device 100 moves away from the hams 3, leaving the latter hooked to the respective hooking device 1, inasmuch as the hooking devices 1 has adopted the closed operating configuration B.

When, on the other hand, it is wished to remove the hams 3 hooked to a respective hooking device 1 mounted on the seasoning frame 2, which is therefore in a closed operating configuration B, the ham loading and removing device 100 is moved by the robotic arm 46 near the hams 3. In particular, the supporting arms 36 of each ham loading and removing unit 31 are taken from the release position P (Figure 8 shown by a dashed line) to the support position S such that the crosspiece 38 and the further crosspiece 43 can support the hams 3 by the lower zone 44 (Figures 8 to 9 shown by a continuous line). The hooking arms 32 of each ham loading and removing unit 31 are arranged in the engaged position E so as to surround at least one portion of the shank 11 of the respective ham 3 (Figures 8 and 9 shown by a continuous line).

Subsequently, the ham loading and removing device 100 is moved in the inserting direction C. During movement of the ham loading and removing device 100 along the inserting direction C, each lifting rod 47 interacts with the respective lower portion 48 to enable the gripping zone Z to widen and thus enable the protruding elements 10 and the further protruding elements 22 to release the respective portions of ham 3 into which they had been inserted, such that each ham 3 can be removed from the respective hooking device 1 (Figures 10 and 11, continuous line) into which it was previously hooked, inasmuch as each hooking device 1 has adopted the open operating configuration A.

At this point, the hams 3 can be repositioned by the ham loading and removing device 100 on the conveying means 60. In particular, the ham loading and removing device 100 is taken by the loading and unloading robot 59 at the removing zone N and the loading and removing units 31 are rotated by the actuating means in particular by about 90° so as to approach the conveying means 60 on which the hams 3 have to be positioned. The hooking arms 32 are arranged in the disengaged position G and the supporting arms 36 are arranged in the release position P, such that the hams 3 are freed from the grip of the hooking arms 32 and from the support of the supporting arms 36 and can be restingly arranged on the conveying means 60. By the robotic arm 46, the ham loading and removing device 100 is then driven along the inserting direction C so as to move away from the conveying means 60. At this point, the loading and removing units 31 are again rotated by the actuating means, in particular by about 90°.

Each hooking device 1 enables a ham 3 to be maintained hooked during the entire seasoning step, also if the ham 3 suffers a weight loss. In fact, the plan area of the gripping zone Z adapts automatically to the varying dimensions during seasoning of a section of the shank 11 of the ham 3, inasmuch as the first plate 9 of the first jaw 6 descends through gravity downwards, dragging with itself the second plate 21 of the second jaw 7. In fact, the openings 15 are shaped in such a manner as to slide the second plate 21 towards the first plate 9 when the latter rotates in the second oscillation direction F2 through the force of gravity, as occurs when the ham 3 loses weight, thus decreasing the dimension of the gripping zone Z.

This prevents the ham 3 falling from the seasoning frame 2, which could entail harm to operators or the loss of the ham 3 because the latter would suffer shocks and the features would be therefore missing that would make the ham suitable for being used as a seasoned ham.

In addition, the step of loading a ham 3 onto the seasoning frame 2 or the step of removing the ham 3 from the seasoning frame 2 can be made robotisable owing to the ham loading and removing device 100.

Further, the hooking devices 1 enable the hams 3 to be maintained in position and spaced on the seasoning frame 2, such that they do not get marked because air does not pass in a uniform manner over the outer surface of the hams 3.

Lastly, the hooking devices 1 can be reused for further hams 3, for example after being subjected to a washing operation.

As explained previously, the ham loading and removing device 100 can hook the hams 3 also directly to the seasoning frame 2 without the hooking devices 1 having to be provided. Hooking devices can in fact be provided of a different type from what has been disclosed above, or hooks or nails onto which the cords or strings of the hams 3 can be placed. In this case, the lifting rod 47 can also not be provided. A widening element, for example in the shape of scissors, can be provided, arranged above the hooking arms 32 to be inserted into a cord or string that can fasten the shank 11 of each ham 3.

The ham loading and removing device 100 according to the invention enables hams 3 to be hooked to, and hams 3 to be removed from, the seasoning frame 2 or from the hooking devices 1 for hooking hams 3 mounted on the seasoning frame 2, in a robotised manner. Further, owing to the loading and removing device for loading and removing hams according to the invention, the hams 3 can be loaded onto the seasoning frames 2 in a completely robotised manner. In fact, the ham loading and removing device 100 according to the invention enables the hams 3 to be removed directly from the conveying means 60 that supplies the hams 3 to the removing zone N, without an operator having to hook the hams 3 by hand onto the ham loading and removing device 100 and enables the hams 3 to be arranged on the conveying means 60 once they have been removed from the seasoning frame 2, without an operator having to release the hams 3 by hand from the ham loading and removing device 100.

## Claims

1. Loading and removing device (100) for loading to, and removing hams (3) from, a seasoning frame (2), said loading and removing device (100) comprising a plurality of loading and removing units (31) for loading and removing hams (3), each loading and removing unit (31) being arranged for loading and removing a ham (3), each loading and removing unit (31) being provided with gripping means (32), **characterized in that** said gripping means (32) is suitable for hooking laterally a portion of a shank (11) of said ham (3), and **in that** said each loading and removing unit (31) is further provided with supporting means comprising a pair of supporting arms (36) connected by a crosspiece (38, 43) arranged for restingly supporting a lower zone (44) of said ham (3), said loading and removing device (100) for loading and removing hams (3) further comprising actuating means configured for rotating said loading and removing units (31) around a bar (57), said loading and removing device (100) being configured for removing said hams (3) from a resting surface of said conveying means (60) on which said hams (3) are restingly arranged by engaging said hams (3) by means of said gripping means (32) and of said supporting means (36), and rotating the hams (3) by means of said actuating means in order to load said hams (3) onto, and unload said hams (3) from, said seasoning frame (2), said supporting arms (36) of said pair of supporting arms (36) being connected to a first end (37) thereof by said crosspiece (38) and being also connected to one another by a further crosspiece (43) arranged for connecting two portions of opposite supporting arms (36) that are arranged between said first ends (37) and second ends (39) of said supporting arms (36), said crosspiece (38) and said further crosspiece (43) being intended for restingly supporting said ham (3) by interacting with respective portions of said lower zone (44) during operations of loading or removing of hams (3).

2. Loading and removing device (100) for loading and removing hams (3) according to claim 1, wherein said gripping means comprises a pair of hooking arms (32) that are rotatable around a rotation axis (R) by movement means (45) between an engaged position (E), in which said hooking arms (32) are moved together to clamp between themselves said portion of said shank (11) and a disengaged position (G), in which said hooking arms (32) are moved away from one another to free said portion of shank (11) from the grip of said hooking arms (32).

3. Loading and removing device (100) for loading and removing hams (3) according to claim 1 or 2, wherein each second end (39) of each supporting arm (36) is hinged on a respective fulcrum (40) on a support device (41) such that said supporting arms (36) are rotatable around respective fulcrums (40) by driving means (42) between a support position (S), in which said crosspiece (38) and said further crosspiece (43) interact with portions of said lower zone (44), and a release position (P), in which said crosspiece (38) and said further crosspiece (43) do not interact with said portions of said lower zone (44).

4. Loading and removing device (100) for loading and removing hams (3) according to any one of claims 1 to 3, and further comprising a pair of side arms (55), comprising a respective first end (56) connected to said bar (57) and a respective second end (58), opposite said first end (56) intended for supporting a connecting crosspiece (52) to which said plurality of loading and removing units (31) is connected.

5. Loading and removing device (100) for loading and removing hams (3) according to claim 4, when claim 4 is dependent on claim 2 or 3, when claim 3 is dependent on claim 2, wherein said hooking arms (32) comprise a first end (33) connected to a support element (34) and a second end (35), opposite said first end (33), intended for hooking laterally a portion of said shank (11), each support element (34) being slidingly connected to said connecting crosspiece (52) on which it can slide driven by lateral movement means (53) so as to vary a distance between two adjacent loading and removing units (31).

6. Loading and removing device (100) for loading and removing hams (3) according to claim 4 or 5, and further comprising lateral collective movement means (54) arranged for moving all the loading and removing units (31) of said plurality of loading and removing units (31) together along said connecting crosspiece (52).

7. Loading and removing device (100) for loading and removing hams (3) according to any one of claims 1 to 6, wherein each loading and removing unit (31) further comprises a lifting rod (47), arranged for interacting with a first plate (9) of a hooking device (1) to widen a gripping zone (Z) of said hooking device (1), said gripping zone (Z) being defined between a profile of protruding elements (10) of said first plate (9) and a profile of further protruding elements (22) of a second plate (21) of said hooking device (1), to enable a ham (3) to be inserted into, or a ham (3) to be removed from a respective hooking device (1) mounted on said seasoning frame (2).

8. Loading and removing device (100) for loading and removing hams (3) according to claim 7, wherein each lifting rod (47) is driven to move by lifting means (51) between a lowered position (V), in which said lifting rod (47) does not interact with said first plate (9), and a raised position (X), in which said lifting rod (47) interacts with said first plate (9).

9. Loading and removing device (100) according to any one of claims 1 to 8, **characterised in that** it is fixable to a robotic arm (46) of a loading and unloading robot (59) for loading and unloading hams (3).

## Patentansprüche

1. Lade- und Entladevorrichtung (100) zum Laden von und Entladen von Schinken (3) von einem Reiferahmen (2), wobei die Lade- und Entladevorrichtung (100) eine Mehrzahl von Lade- und Entladeeinheiten (31) zum Laden und Entladen von Schinken (3) aufweist, wobei jede Lade- und Entladeeinheit (31) zum Laden und Entladen eines Schinkens (3) ausgebildet ist, wobei jede Lade- und Entladeeinheit (31) mit einem Greifmittel (32) versehen ist, **dadurch gekennzeichnet, dass** das Greifmittel (32) geeignet ist, um einen Teil eines Schaftes (11) des Schinkens (3) quer einzuhaken, und dass jede Lade- und Entladeeinheit (31) ferner mit einem Aufnahmemittel versehen ist, das ein Paar von Aufnahmearmen (36) aufweist, die durch ein Querstück (38, 43) verbunden sind, das angeordnet ist, um einen unteren Bereich (44) des Schinkens (3) abstützend zu halten, wobei die Lade- und Entladevorrichtung (100) zum Laden und Entladen von Schinken (3) ferner ein Betätigungsmittel aufweist, das ausgebildet ist, um die Lade- und Entladeeinheiten (31) um eine Stange (57) zu drehen, wobei die Lade- und Entladevorrichtung (100) dazu ausgebildet ist, die Schinken (3) von einer Stützfläche des Fördermittels (60), auf dem die Schinken (3) aufliegend angeordnet sind, mithilfe des Greifmittels (32) und des Stützmittels (36) aufzunehmen und die Schinken (3) mithilfe des Betätigungsmittels zu drehen, und die Schinken (3) auf den Reiferahmen (2) zu laden und davon zu entladen, wobei die Stützarme (36) des Paars von Stützarmen (36) mit einem ersten Ende (37) davon mittels des Querstücks (38) verbunden ist und ferner mit einem anderen durch ein weiteres Querstück (43) verbunden ist, das vorgesehen ist, um zwei Bereiche von gegenüberliegenden Stützarmen (36) zu verbinden, die zwischen den ersten Enden (37) und den zweiten Enden (39) des Stützarms (36) angeordnet sind, wobei das Querstück (38) und das weitere Querstück (43) dazu vorgesehen sind, den Schinken (3) aufliegend abzustützen, indem mit betreffenden Bereichen der unteren Zone (44) während der Vorgänge des Ladens oder Entladens der Schinken (3) zusammengewirkt wird.

2. Lade- und Entladevorrichtung (100) zum Laden und Entladen von Schinken (3) nach Anspruch 1, bei dem das Greifmittel ein Paar von Hakenarmen (32) aufweist, die um eine Drehachse (R) mithilfe eines Bewegungsmittels (45) zwischen einer im Eingriff befindlichen Position (E), in der die Hakenarme (32) zusammenbewegt werden, um zwischen ihnen den Bereich des Schaftes (11) einzuklemmen, und einer gelösten Position (G) drehbar ist, in der die Hakenarme (32) voneinander weg bewegt werden, um den Schaft (11) von dem Griff der Hakenarme (32) zu befreien.

3. Lade- und Entladevorrichtung (100) zum Laden und Entladen von Schinken (3) nach Anspruch 1 oder 2, bei der jedes zweite Ende (39) von jedem Stützarm (36) an einem entsprechenden Drehpunkt (40) auf einer Stützeinrichtung (41) derart angelenkt ist, dass die Stützarme (36) um die betreffenden Drehpunkte (40) mithilfe eines Antriebsmittels (44) zwischen einer Stützposition (S), in der das Querstück (38) und das weitere Querstück (43) mit Bereichen der unteren Zone (44) zusammenwirken, und einer Freigabeposition (P) drehbar sind, in der das Querstück (38) und das weitere Querstück (43) nicht mit den Bereichen der unteren Zone (44) zusammenwirken.

4. Lade- und Entladevorrichtung (100) zum Laden und Entladen von Schinken (3) nach irgendeinem der Ansprüche 1 bis 3, die ferner ein Paar von Seitenarmen (55) aufweist, die ein betreffendes erstes Ende (56) aufweisen, das mit der Strebe (57) verbunden ist, und ein zweites Ende (58) aufweisen, das gegenüber dem ersten Ende (56) angeordnet ist und dazu vorgesehen ist, eine Verbindung des Querstücks (52) zu halten, mit dem die Mehrzahl von Lade- und Entladeeinheiten (31) verbunden ist.

5. Lade- und Entladevorrichtung (100) zum Laden und Entladen von Schinken (3) nach Anspruch 4, soweit Anspruch 4 von Anspruch 2 oder 3 abhängig ist, soweit Anspruch 3 von Anspruch 2 abhängig ist, wobei die Hakenarme (32) ein erstes Ende (33) aufweisen, das mit einem Stützelement (34) verbunden ist, und ein zweites Ende (35) gegenüber dem ersten Ende (33) verbunden ist, das zum Einhaken eines Bereiches des Schaftes (11) in Querrichtung vorgesehen ist, wobei jedes Stützelement (34) gleitend mit dem verbindenden Querstück (52) verbunden ist, an dem es mittels eines Querbewegungsmittels (53) verschoben werden kann, um einen Abstand zwischen zwei benachbarten Lade- und Entladeeinheiten (31) zu variieren.

6. Lade- und Entladevorrichtung (100) zum Laden und Entladen von Schinken (3) nach Anspruch 4 oder 5, die ferner ein gemeinsames Quersammelmittel (54) aufweist, das zum Bewegen sämtlicher Lade- und Entladeeinheiten (31) der Mehrzahl von Lade- und Entladeeinheiten (31) zusammen entlang des verbindenden Querstücks (52) ausgebildet ist.

7. Lade- und Entladevorrichtung (100) zum Laden und Entladen von Schinken (3) nach irgendeinem der Ansprüche 1 bis 6, bei dem jede Lade- und Entladeeinheit (31) ferner eine Hebestange (47) aufweist, die angeordnet ist, um mit einer ersten Platte (9) einer Hakeneinrichtung (1) zusammenzuwirken, um eine Greifzone (Z) der Hakeneinrichtung (1) aufzuweiten, wobei die Greifzone (Z) zwischen einem Profil von vorstehenden Elementen (10) der ersten Platte (9) und einem Profil von weiteren vorstehenden Elementen (22) einer zweiten Platte (21) zur Hakeneinrichtung (1) definiert ist, um es einem Schinken (3) zu ermöglichen, in eine betreffende Hakeneinrichtung (1), die an dem Reiferahmen (2) befestigt ist, eingeführt zu werden oder davon entfernt zu werden.

8. Lade- und Entladevorrichtung (100) zum Laden und Entladen von Schinken (3) nach Anspruch 7, bei dem jede Hebestange (47) angetrieben ist, um das Hebemittel (51) zwischen einer abgesenkten Position (V), in der die Hebestange (47) nicht mit der ersten Platte (9) zusammenwirkt, und einer angehobenen Position (X) zu bewegen, in der die Hebestange (47) mit der ersten Platte (9) zusammenwirkt.

9. Lade- und Entladevorrichtung (100) zum Laden und Entladen von Schinken (3) nach irgendeinem der Ansprüche 1 bis 8, **dadurch gekennzeichnet, dass** sie an einem Roboterarm (46) eines Lade- und Entladeroboters (59) festlegbar ist, um die Schinken (3) zu laden und zu entladen.

## Revendications

1. Dispositif de chargement et d'enlèvement (100) pour charger des jambons (3) sur un cadre de séchage (2) et les enlever de celui-ci, ledit dispositif de chargement et d'enlèvement (100) comprenant une pluralité d'unités de chargement et d'enlèvement (31) pour charger et enlever des jambons (3), chaque unité de chargement et d'enlèvement (31) étant arrangée pour charger et enlever un jambon (3), chaque unité de chargement et d'enlèvement (31) étant pourvue de moyens de préhension (32), **caractérisé en ce que** lesdits moyens de préhension (32) sont aptes à accrocher latéralement une partie d'un jarret (11) dudit jambon (3), et **en ce que** chaque unité de chargement et d'enlèvement (31) est en outre pourvue de moyens de support comprenant une paire de bras de support (36) reliés par une pièce en croix (38, 43) arrangée pour supporter en appui une zone inférieure (44) dudit jambon (3), ledit dispositif de chargement et d'enlèvement (100) pour charger et enlever des jambons (3) comprenant en outre des moyens d'actionnement configurés pour tourner lesdites unités de chargement et d'enlèvement (31) autour d'une barre (57), ledit dispositif de chargement et d'enlèvement (100) étant configuré pour enlever lesdits jambons (3) d'une surface d'appui desdits moyens de transport (60) sur laquelle lesdits jambons (3) sont arrangés en appui en engageant lesdits jambons (3) à l'aide desdits moyens de préhension (32) et desdits moyens de support (36), et pour tourner les jambons (3) à l'aide desdits moyens d'actionnement afin de charger lesdits jambons (3) sur ledit cadre de séchage (2) et de décharger lesdits jambons de celui-ci, lesdits bras de support (36) de ladite paire de bras de support (36) étant reliés à une première extrémité (37) de ceux-ci par ladite pièce en croix (38) et étant également reliés l'un à l'autre par une autre pièce en croix (43) arrangée pour relier deux parties de bras de support opposés (36) qui sont arrangés entre lesdites premières extrémités (37) et les deuxièmes extrémités (39) desdits bras de support (36), ladite pièce en croix (38) et ladite autre pièce en croix (43) étant destinées à supporter en appui ledit jambon (3) en interagissant avec des parties respectives de ladite zone inférieure (44) pendant les opérations de chargement ou d'enlèvement des jambons (3).

2. Dispositif de chargement et d'enlèvement (100) pour charger et enlever des jambons (3) selon la revendication 1, dans lequel lesdits moyens de préhension comprennent une paire de bras d'accrochage (32) qui sont aptes à être tournés autour d'un axe de rotation (R) par des moyens de déplacement (45) entre une position engagée (E), dans laquelle lesdits bras d'accrochage (32) sont rapprochés l'un de l'autre pour bloquer entre eux ladite partie dudit jarret (11) et une position dégagée (G), dans laquelle lesdits bras d'accrochage (32) sont éloignés l'un de l'autre pour libérer ladite partie du jarret (11) de la préhension desdits bras d'accrochage (32).

3. Dispositif de chargement et d'enlèvement (100) pour charger et enlever des jambons (3) selon la revendication 1 ou 2, dans lequel chaque deuxième extrémité (39) de chaque bras de support (36) est articulée sur un pivot respectif (40) sur un dispositif de support (41) de telle sorte que lesdits bras de support (36) soient aptes à être tournés autour de pivots (40) respectifs par des moyens d'entraînement (42) entre une position de support (S), dans laquelle ladite pièce en croix (38) et ladite autre pièce en croix (43) interagissent avec des parties de ladite zone inférieure (44), et une position de déblocage (P), dans laquelle ladite pièce en croix (38) et ladite autre pièce en croix (43) n'interagissent pas avec lesdites parties de ladite zone inférieure (44).

4. Dispositif de chargement et d'enlèvement (100) pour charger et enlever des jambons (3) selon l'une quelconque des revendications 1 à 3, et comprenant en outre une paire de bras latéraux (55), comprenant une première extrémité respective (56) reliée à ladite barre (57) et une deuxième extrémité respective (58), opposée à la première extrémité (56), destinée à supporter une pièce en croix (52) à laquelle ladite pluralité d'unités de chargement et d'enlèvement (31) est reliée.

5. Dispositif de chargement et d'enlèvement (100) pour charger et enlever des jambons (3) selon la revendication 4, quand la revendication 4 est dépendante de la revendication 2 ou 3, quand la revendication 3 est dépendante de la revendication 2, dans lequel lesdits bras d'accrochage (32) comprennent une première extrémité (33) reliée à un élément de support (34) et une deuxième extrémité (35), opposée à ladite première extrémité (33), destinée à accrocher latéralement une partie dudit jarret (11), chaque élément de support (34) étant relié coulissant à ladite pièce en croix de liaison (52) sur laquelle il peut coulisser, entraîné par des moyens de déplacement latéral (53) de manière à faire varier une distance entre deux unités de chargement et d'enlèvement (31) adjacentes.

6. Dispositif de chargement et d'enlèvement (100) pour charger et enlever des jambons (3) selon la revendication 4 ou 5, et comprenant en outre des moyens de déplacement collectif latéral (54) arrangés pour déplacer toutes les unités de chargement et d'enlèvement (31) de ladite pluralité d'unités de chargement et d'enlèvement (31) ensemble le long de ladite pièce en croix de liaison (52).

7. Dispositif de chargement et d'enlèvement (100) pour charger et enlever des jambons (3) selon l'une quelconque des revendications 1 à 6, dans lequel chaque unité de chargement et d'enlèvement (31) comprend en outre une tige de soulèvement (47), arrangée pour interagir avec une première plaque (9) d'un dispositif d'accrochage (1) pour élargir une zone de préhension (Z) dudit dispositif d'accrochage (1), ladite zone de préhension (Z) étant définie entre un profil d'éléments saillants (10) de ladite première plaque (9) et un profil d'autres éléments saillants (22) d'une deuxième plaque (21) dudit dispositif d'accrochage (1), pour permettre à un jambon (3) d'être inséré dans un dispositif d'accrochage respectif (1) monté sur ledit cadre de séchage (2) ou d'être enlevé de ce dispositif d'accrochage respectif (1).

8. Dispositif de chargement et d'enlèvement (100) pour charger et enlever des jambons (3) selon la revendication 7, dans lequel chaque tige de soulèvement (47) est entraînée pour un déplacement par des moyens de soulèvement (51) entre une position abaissée (V, dans laquelle ladite tige de soulèvement (47) n'interagit pas avec ladite première plaque (9), et une position relevée (X), dans laquelle ladite tige de soulèvement (47) interagit avec ladite première plaque (9).

9. Dispositif de chargement et d'enlèvement (100) selon l'une quelconque des revendications 1 à 8, **caractérisé en ce qu'**il est apte à être fixé à un bras robotisé (46) d'un robot de chargement et de déchargement (59) pour charger et décharger des jambons (3).
